# EUROPEAN PATENT SPECIFICATION

(11) **EP 1 279 524 B1**
(45) Date of publication and mention of the grant of the patent: **03.05.2006**
(21) Application number: 02016190.7
(22) Date of filing: 22.07.2002
(51) Int. Cl.: B60B 33/00

(54) **Castor wheel construction**
Lenkrollenkonstruktion
Construction de roulette pivotante

(30) Priority: 24.07.2001 IT MI20010421 U
(43) Date of publication of application: 29.01.2003
(73) Proprietor: O.G.T.M. Officine Meccaniche S.r.l., 26866 S. Angelo Lodigiano (Lodi) (IT)
(72) Inventor: Trivini, Ruggero, 26866 S.Angelo Lodigiano (Lodi) (IT)
(74) Representative: Cicogna, Franco

(56) References cited:
- EP-A- 0 259 131
- EP-A- 0 650 854
- GB-A- 839 272
- US-A- 4 333 207
- PATENT ABSTRACTS OF JAPAN vol. 2000, no. 02, 29 February 2000 (2000-02-29) & JP 11 321208 A (SUZUKI MASACHIKA), 24 November 1999 (1999-11-24)

## Description

### BACKGROUND OF THE INVENTION

The present invention relates to a castor wheel construction.

Castor wheels including a locking and unlocking device for respectively locking and unlocking the rotary movement of the wheel, which device conventionally comprise a pedal lever operating on the wheel by different types of interference or friction means are already known.

A castor wheel construction according to the preamble of claim 1 is for instance known from document US-A-4 333 207.

The braked castor wheels are used in a broad range of applications, and these castor wheels must be reliable in operation, and economically advantageous from a mere construction standpoint.

### SUMMARY OF THE INVENTION

Accordingly, the aim of the present invention is to provide such a castor wheel construction having very good operating and safety characteristics, while being very simple construction-wise.

Within the scope of the above mentioned aim, a main object of the invention is to provide such a castor wheel construction which comprises a very small number of component parts, which can be easily made and easily assembled.

Yet another object of the present invention is to provide such a castor wheel construction the use of which is easy and self-evident.

According to the present invention, the above mentioned aim and objects, as well as yet other objects, which will become more apparent hereinafter, are achieved by a castor wheel having the features of claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

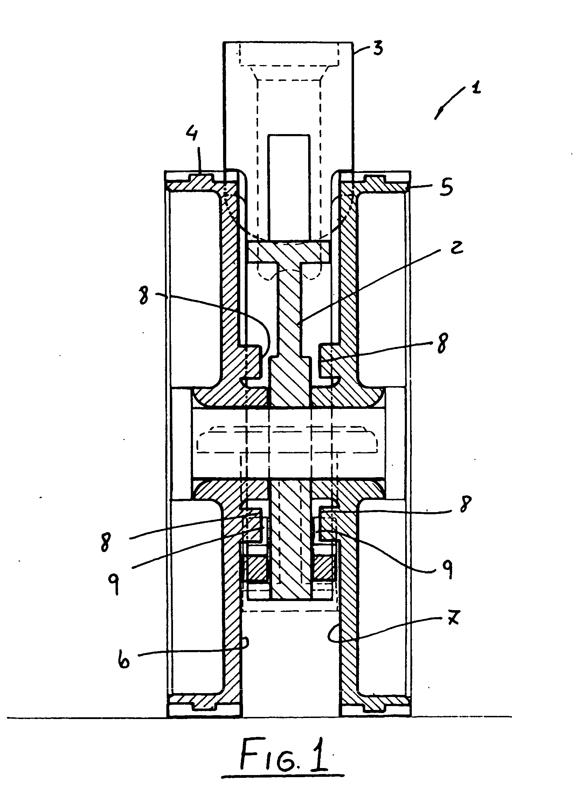

Figure 1 is a front cross-sectional elevation view of the castor wheel construction according to the invention;
Figure 2 is a further side elevation view, partially broken away, of the castor wheel construction according to the present invention, being shown in a locked position thereof; and
Figure 3 is a view similar to figure 2, but showing the castor wheel construction according to the present invention, in a free rotary position or condition thereof.

### DESCRIPTION OF THE PREFERRED EMBODIMENT

With reference to the number references of the above mentioned figures, the castor wheel construction according to the present invention, which has been generally indicated by the reference number 1, comprises a hub 2, including an end-piece 3 for connection with an article, not specifically shown, which must be provided with castor wheels.

The hub 2 supports a wheel body, comprising two half-portions 4 and 5, which are made rigid with one another on said hub 2, in order to allow the wheel body to rotate with respect to the hub.

The two half-portions 4 and 5 of the wheel body have each an inner surface, respectively indicated at 6 and 7, facing the hub 2 and including bosses or ridges 8, arranged along a circumference about the rotary axis of the wheel body.

The ridges 8 are suitably beveled and have in the shown embodiment a drop shape, with a longitudinal axis radially extending with respect to the rotary axis of the wheel body.

The two pluralities of ridges 8, each for one of the two half-portions 4 and 5 of the wheel body, are respectively designed for engaging a pair of teeth 9, with a tooth for each side, of a fork lever 10, pivoted at a pivot pin 11 on the hub 2.

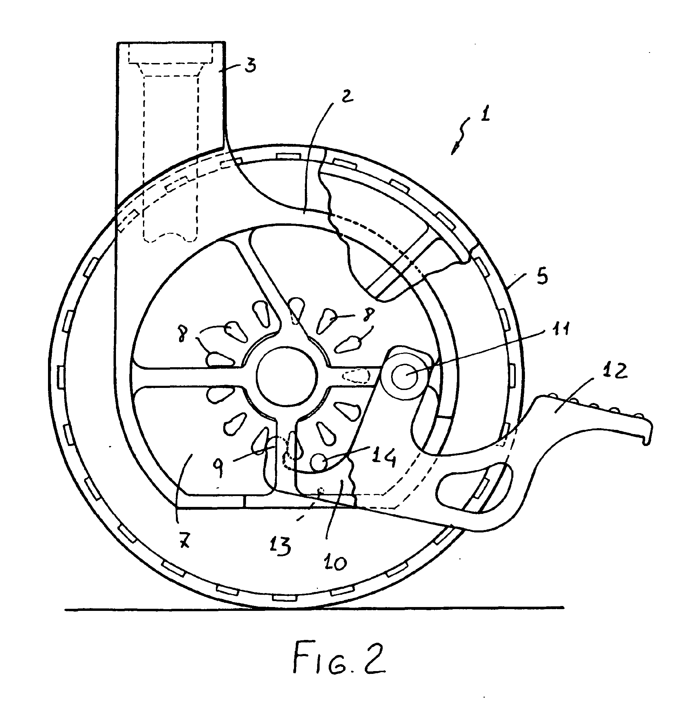

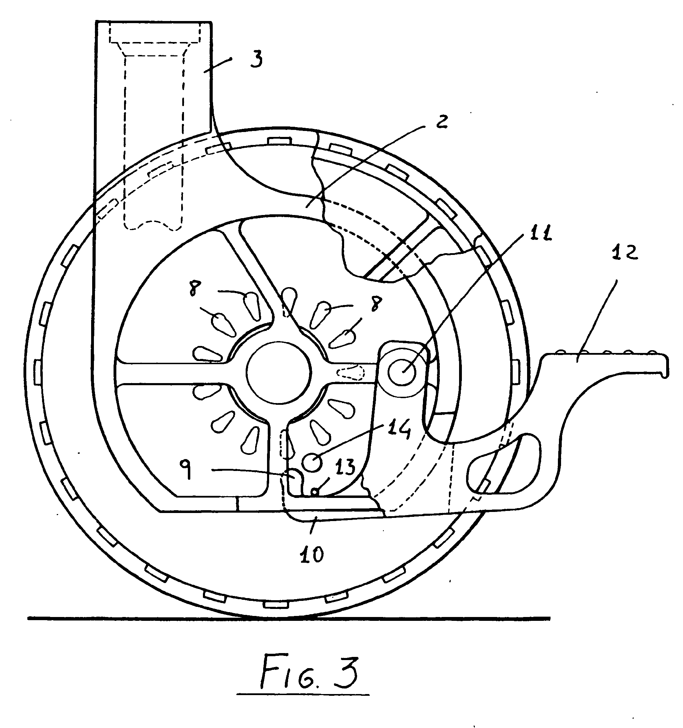

The fork lever 10 is moreover provided with a pedal 12, projecting outward of the wheel body to be driven by a foot, thereby displacing the fork lever 10 from a wheel body free rotary position, shown in figure 3, to a wheel body locked position, as shown in figure 2.

The drop-like beveled configuration of the ridges 8, and a rounded end of the tooth 9, allow to obtain a fluidic engagement between the tooth 9 and ridges 8 to prevent any jams for occurring as the tooth end is precisely arranged at a tooth, as the castor wheel must be locked.

In order to prevent the fork lever 10 from accidentally moving away from the locking position, the hub 2 comprises an interference element 13, including, for example, a boss or the like, designed for interfering with the lever 10, thereby requiring a given effort in order to disengage said lever from the interference element.

Moreover, an end of stroke or limit element 14, limiting the rotary movement of the lever 10 in the wheel locking position is provided.

All the disclosed elements, such as the ridges 8, interference element 10 and limit element 14 are made as a single body with the respective components they are rigid with, as said components are made.

It has been found that the invention fully achieves the intended aim and objects.

In fact, the invention provides a castor wheel construction which is very simple and unexpensive from a mere construction standpoint, while having very good operating features.

By a very small number of components, all of which can be easily made and assembled, a castor wheel construction with very good operating safety features has been provided.

In practicing the invention, the used materials and the contingent size and shapes, can be any, depending on requirements and the status of the art.

## Claims

1. A castor wheel construction (1) comprising a supporting hub (2) supporting a wheel body (4, 5) and a pedal lever (10), and engaging means (9), driven by said pedal lever (10), said engaging means (9) defining at least a locking position for locking a rotation of said wheel body (4, 5) and at least a free position for allowing said wheel body (4, 5) to freely rotate, said wheel body comprising two half-portions (4, 5) made rigid with one another on said hub (2) to allow said wheel body to rotate, with respect to said hub (2), the two half-portions (4, 5) of the wheel body having each an inner surface (6, 7) facing said hub (2) and presenting a plurality of ridges (8) **characterized in that** said pedal lever is a fork pedal lever (10) and that said engaging means (9) comprise two end teeth (9) each integral with a respective end portion of said fork pedal lever (10) and designed for engaging said plurality of ridges (8) which are circumferentially arranged on said respective inner surface (6, 7) near the rotary axis of said wheel body (4,5).

2. A castor wheel construction, according to Claim 1, **characterized in that** said ridges (8) are beveled and have a drop shape, with a longitudinal axis radially arranged with respect to the rotary axis of the wheel body.

3. A castor wheel construction, according to Claim 1, **characterized in that** said two pluralities of ridges (8), one plurality for each respective half-portion (4, 5) of the wheel body said are respectively designed for engaging pair of end teeth (9) of said fork lever (10) which is pivoted on a pin (11) on said hub (2).

4. A castor wheel construction, according to Claim 1, **characterized in that** said wheel construction further comprises an interference element (13) designed for engaging said fork pedal lever (10) at said wheel body rotary locking position, thereby an effort would be required for disengaging said fork pedal lever (10) from said interference element (13) and hence from said locked position of said wheel body (4, 5).

5. A castor wheel construction, according to Claim 1, **characterized in that** said castor wheel construction comprises a limit element (14) designed for limiting the rotary movement of said fork pedal lever (10) in the castor wheel locking position.

## Patentansprüche

1. Lenkrollenkonstruktion (1), umfassend eine tragende Nabe (2), die einen Radkörper (4, 5) und einen Pedalhebel (10) trägt, sowie Eingriffnahmemittel (9), die von dem Pedalhebel (10) angetrieben werden, wobei die Eingriffnahmemittel (9) wenigstens eine Arretierungsposition zum Arretieren einer Drehbewegung des Radkörpers (4, 5) und wenigstens eine freie Position, die dem Radkörper (4, 5) ein ungehindertes Drehen gestattet, definieren, wobei der Radkörper zwei Hälften (4, 5) umfasst, die starr miteinander an der Nabe (2) ausgebildet sind, dergestalt, dass sich der Radkörper relativ zu der Nabe (2) drehen kann, wobei die beiden Hälften (4, 5) des Radkörpers jeweils eine Innenfläche (6, 7) aufweisen, die der Nabe (2) zugewandt ist und mehrere Vorsprünge (8) aufweist, **dadurch gekennzeichnet, dass** der Pedalhebel ein gabelförmiger Pedalhebel (10) ist und dass die Eingriffnahmemittel (9) zwei Endzähne (9) umfassen, die jeweils integral mit einem entsprechenden Endabschnitt des gabelförmigen Pedalhebels (10) ausgebildet sind und dafür ausgelegt sind, die mehreren Vorsprünge (8) in Eingriff zu nehmen, die umfänglich an der jeweiligen Innenfläche (6, 7) nahe der Drehachse des Radkörpers (4, 5) angeordnet sind.

2. Lenkrollenkonstruktion nach Anspruch 1, **dadurch gekennzeichnet, dass** die Vorsprünge (8) abgeschrägt sind und eine Tropfenform haben, wobei eine Längsachse radial relativ zu der Drehachse des Radkörpers angeordnet ist.

3. Lenkrollenkonstruktion nach Anspruch 1, **dadurch gekennzeichnet, dass** die beiden Mehrzahlen von Vorsprüngen (8) - eine Mehrzahl für jede jeweilige Hälfte (4, 5) des Radkörpers - jeweils dafür ausgelegt sind, das Paar Endzähne (9) des gabelförmigen Hebels (10), der an einem Stift (11) an der Nabe (2) angelenkt ist, in Eingriff zu nehmen.

4. Lenkrollenkonstruktion nach Anspruch 1, **dadurch gekennzeichnet, dass** die Radkonstruktion des Weiteren ein Sperrelement (13) umfasst, das dafür ausgelegt ist, den gabelförmigen Pedalhebel (10) in der Position, in der eine Drehbewegung des Radkörpers blockiert ist, in Eingriff zu nehmen, wodurch eine Anstrengung nötig wäre, um den gabelförmigen Pedalhebel (10) aus der Eingriffnahme mit dem Sperrelement (13) und somit aus der arretierten Position des Radkörpers (4, 5) zu lösen.

5. Lenkrollenkonstruktion nach Anspruch 1, **dadurch gekennzeichnet, dass** die Lenkrollenkonstruktion ein Begrenzungselement (14) umfasst, das zum Begrenzen der Drehbewegung des gabelförmigen Pedalhebels (10) in der Lenkrollenarretierungsposition ausgelegt ist.

## Revendications

1. Construction à roue pivotante (1) comprenant un moyeu de support (2) supportant un corps de roue (4, 5) et un levier de pédale (10) et un moyen d'emboîtement (9) entraîné par ledit levier de pédale (10), ledit moyen d'emboîtement (9) présentant au moins une position de blocage pour bloquer une rotation dudit corps de roue (4, 5) et au moins une position libre afin de permettre audit corps de roue (4, 5) de tourner librement, ledit corps de roue comprenant deux moitiés (4, 5) immobilisées l'une par rapport à l'autre sur ledit moyeu (2) afin de permettre audit corps de roue de tourner par rapport audit moyeu (2), les deux moitiés (4, 5) du corps de roue présentant chacune une surface interne (6, 7) face audit moyeu (2) et une pluralité de saillies (8), **caractérisée en ce que** ledit levier de pédale est un levier de pédale à fourche (10) et **en ce que** ledit moyen d'emboîtement (9) comprend deux dents d'extrémité (9), chacune étant formée d'une seule pièce avec une partie d'extrémité correspondante dudit levier de pédale à fourche (10) et étant conçue pour s'emboîter avec ladite pluralité de saillies (8) disposées sur la circonférence de ladite surface interne (6, 7) correspondante à proximité de l'axe de rotation dudit corps de roue (4, 5).

2. Construction à roue pivotante selon la revendication 1, **caractérisée en ce que** lesdites saillies (8) sont chanfreinées et présentent une forme de goutte, avec un axe longitudinal disposé radialement par rapport à l'axe de rotation du corps de roue.

3. Construction à roue pivotante selon la revendication 1, **caractérisée en ce que** lesdits deux ensembles de saillies (8), c'est-à-dire un ensemble pour chaque moitié correspondante (4, 5) du corps de la roue, sont conçus pour s'emboîter avec ladite paire de dents (9) dudit levier de pédale à fourche (10) qui pivote sur une tige (11) disposée sur ledit moyeu (2).

4. Construction à roue pivotante selon la revendication 1, **caractérisée en ce que** ladite construction à roue comprend en outre un élément d'interférence (13) conçu pour s'emboîter avec ledit levier de pédale à fourche (10) dans la position de blocage de la rotation dudit corps de roue, un effort étant donc nécessaire pour désengager ledit levier de pédale à fourche (10) dudit élément d'interférence (13) et donc de ladite position bloquée dudit corps de roue (4, 5).

5. Construction à roue pivotante selon la revendication 1, **caractérisée en ce que** ladite construction à roue pivotante comprend un élément limiteur (14) conçu pour limiter le mouvement de rotation dudit levier de pédale à fourche (10) dans la position de blocage de la roue pivotante.
